**Europäisches Patentamt**

**European Patent Office**

**Office européen des brevets**

(19)

(11) Veröffentlichungsnummer: **0 001 596**
**B1**

(12) **EUROPÄISCHE PATENTSCHRIFT**

(45) Veröffentlichungstag der Patentschrift: **26.05.82**

(21) Anmeldenummer: **78101079.8**

(22) Anmeldetag: **06.10.78**

(51) Int. Cl.³: **C 08 G 12/12,**
**C 08 G 12/38, C 09 J 3/16**

(54) **Verfahren zur Herstellung von wässrigen Harnstoff-Formaldehyd-Kondensaten.**

(30) Priorität: **26.10.77 DE 2747830**

(43) Veröffentlichungstag der Anmeldung:
**02.05.79 Patentblatt 79/9**

(45) Bekanntmachung des Hinweises auf die Patenterteilung:
**26.05.82 Patentblatt 82/21**

(84) Benannte Vertragsstaaten:
**BE CH DE FR GB NL**

(56) Entgegenhaltungen:
**DE - A - 2 454 769**
**DE - B - 1 570 240**
**DE - B - 2 334 380**

(73) Patentinhaber: **BASF Aktiengesellschaft**
**Carl-Bosch-Strasse 38**
**D-6700 Ludwigshafen (DE)**

(72) Erfinder: **Brunnmueller, Fritz, Dr.**
**Leopoldstrasse 19**
**D-6700 Ludwigshafen (DE)**
Erfinder: **Mayer, Hohann, Dr.**
**Am Mandelgarten 5**
**D-6713 Freinsheim (DE)**
Erfinder: **Lehmann, Gerhard J.**
**Neuwiesenstrasse 4**
**D-6700 Ludwigshafen (DE)**
Erfinder: **Wittmann, Otto**
**Max-Beckmann-Strasse 7b**
**D-6710 Frankenthal (DE)**
Erfinder: **Bolz, Werner**
**An der Froschlache 1**
**D-6700 Ludwigshafen (DE)**
Erfinder: **Kaesbauer, Friedrich, Dr.**
**Neuhofener Strasse 57**
**D-6703 Limburgerhof (DE)**

Courier Press, Leamington Spa, England.

## 0 001 596

### Verfahren zur Herstellung von wässrigen Harnstoff-Formaldehyd-Kondensaten

Die Erfindung betrifft ein Verfahren zur Herstellung von wässrigen Harnstoff-Formaldehyd-kondensaten die sich zur Verleimung (Verklebung) von Holz bzw. zur Erzeugung von Holzwerkstoffen eignen und eine verbesserte Vor- bzw. Kaltklebekraft besitzen.

Die sogenannte Kaltklebrigkeit bezeichnet die Eigenschaft eines Klebstoffes, in feuchtem Zustand, also schon vor dem Abbinden bzw. Aushärten die zu verklebenden Werkstoffteile durch Kohäsion zusammenzuhalten.

Der Übergang von der Kaltklebrigkeit zur endgültigen Bindung, die je nach der chemischen Natur des Klebstoffes als Folge von chemischen Prozessen und/oder Lösungsmittelverlusten eintritt, ist vielfach unscharf.

Bei vielen technischen Leimungs- bzw. Klebeverfahren ist eine gute oder sogar hohe Kaltklebrigkeit erwünscht, weil die zu verleimenden Werkstoffteile ihre relative Lage möglichst ohne Einwirkung von Fremdkräften (Druck, Fixierung durch mechanische Mittel) beibehalten sollen, bis der Abbindeprozeß des aufgetragenen Leimes einsetzt.

Besonders bei der Herstellung von Spanplatten ist Kaltklebrigkeit der Leime oft erwünscht, um die ohne Erwärmung vorgepreßten Spänekuchen in die Heißpresse fördern zu können, ohne daß sie zerfallen. Da die üblichen Spanplattenleime (z.B. Harnstoffharze) von sich aus nicht ausreichend kleben, versucht man diese Eigenschaft z.B. durch Zusätze zu verbessern.

Bisher ist jedenfalls bei Spanplattenleimen auf der Grundlage von Harnstoff-Formaldehyd-Kondensaten (d.h. Aminoplastharzen im engeren Sinne) nicht gelungen, verbesserte Kaltklebrigkeit durch Maßnahmen bei der Kondensation zu erzielen. Die vorgeschlagenen Zusätze (z.B Sulfitablauge, DE—A 23 54 928) die zwar im Sinne einer Verbesserung der Kaltklebrigkeit wirken, können aber, zumal bei größeren Zusatzmengen, die Leimeigenschaften negativ beeinflussen.

Es ist allgemein bekannt, daß Aminoplastharze in jedem Falle aus chemisch und nach der Molekülgröße uneinheitlichen Kondensationsprodukten bestehen. Aus z.B. der DE—B 15 70 240 ist darüberhinaus ein Verfahren zur Herstellung von speziell als Tränkharzen geeigneten Aminoplastlösungen bekannt, die sowohl (niedermolekulare) Methylolverbindungen von Aminoplastbildnern als auch (höhermolekulare und daher beschränkt wasserlösliche) Kondensationsprodukte solcher Aminoplastbildner mit Formaldehyd enthalten. Aus der Sicht des Polymerchemikers enthalten solche Lösungen also Polymere mit einer gegebenen Molekulargewichtsverteilung neben Produkten, die als Monomere betrachtet werden können.

Weiterhin ist bekannt, daß Formaldehyd mit gewissen Monomeren niedermolekulare Anlagerungsprodukte bilden kann, die dann ein sehr hohes Molverhältnis von Formaldehyd zum Aminoplastbildner aufweisen (z.B. 3,5 bis 4) und ihrerseits unter Zusatz von z.B. Harnstoff in Leimharze überführt werden können (vgl. z.B. die DE—B 23 34 380). Solche Anlagerungsprodukte werden nachfolgend auch als (formaldehydreiche) Harnstoff-Formaldehyd-Vorkondensate (A) bezeichnet.

Andere solche Vorkondensate, die sich von den eben erwähnten u.a. durch einen besonders hohen Methylolgruppen-Gehalt unterscheiden, sind in der DE—A 24 54 769 beschrieben.

Keines der vorerwähnten Produkte bzw. Produktgemische ist jedoch in der Lage, als kaltklebriger Holzleim zu dienen und nirgends ist erwähnt, daß bzw. wie aus solchen Produkten kaltklebrige Holzleime erhalten werden können.

Die Erfindung hat sich zur Aufgabe gesetzt, die Verbesserung der Kaltklebrigkeit und anderer erwünschter Eigenschaften von aminoplastischen Leimharzen durch Maßnahmen bei der Kondensation zu erzielen.

Es hat sich gezeigt, daß dies möglich ist, wenn man eine bestimmte Verteilung der Molekülgrößen bei der Kondensation erreicht, wie dies noch erläutert wird.

Erfindungsgegenstand its ein Verfahren zur Herstellung von wäßrigen Harnstoff-Formaldehyd-Kondensaten, die sich als kaltklebende Holzleime, insbesondere Spanplattenleime eignen, das dadurch gekennzeichnet ist, daß man ein gegebenenfalls Melamin in modifizierenden Mengen enthaltendes wäßriges Aminoplastkondensat (B), das erthalten wurde durch

a) Umsetzung von wäßrigem Formaldehyd mit Harnstoff und gegebenenfalls Melamin in modifizierenden Mengen und/bzw. deren Vorkondensaten im Molverhältnis von 1,8:1 bis 2,5:1 bei einem pH-Wert von über 6,8,

b) Kondensation der Umsetzungsprodukte bei einem pH-Wert von 3 bis 5,5 bis zur beginnenden Wasserunverträglichkeit (entsprechend einem Trübungspunkt der underdünnten, 30 bis 55%-igen Lösung von 3 bis 30°C) und

c) Umsetzung der Kondensationsprodukte mit Harnstoff bei einem pH-Wert von 6,5 bis 7,5 bis zu einem Molverhältnis von 1:1 bis 1,7:1, gegebenenfalls nach Einengung unter vermindertem Druck auf eine Konzentration von 55 bis 70%

mit einem durch Einleiten von Formaldehyd in eine Wäßrige Harnstofflösung erhältlichen, freien Formaldehyd enthaltenden Harnstoff-Formaldehyd-Vorkondensat (A), das ein Molverhältnis von F:H wie 3:1 bis 5:1 aufweist, in solchen Mengen vermischt, daß das Gesamtmolverhältnis 1,2:1 bis 1,8:1 beträgt und gegenüber dem Harz (B) um wenigstens 0,1 Mol Formaldehyd ansteigt und die Mischung

2

**0 001 596**

bei einem pH-Wert von 6,5 bis 8 wenigstens solange beläßt, bis der Gehalt an freiem Formaldehyd auf unter 1% gesunken ist.

Das auf diese Weise erhaltene erfindungsgemäße Harzprodukt wird im folgenden auch als Harz (C) bezeichnet (mit den in der Chemie der Phenoplaste üblichen Bezeichnungen haben die vorstehenden Kennzeichnungen nichts zu tun).

Das Verfahren zur Herstellung der kaltklebenden Leimharzlösungen gelingt mit gutem Erfolg innerhalb der angegebenen Merkmalsgrenzen, jedoch werden besonders gute Eigenschaften der Harze, auch im Hinblick auf die Eigenshaften der hiermit herzustellenden Werkstoffe, unter den nachstehend erläuterten bevorzugten Bedingungen erzielt. Darüber hinaus empfiehlt es sich, die dem Fachmann an sich bekannten Regeln einzuhalten, insbesondere keine Bedingungen zu wählen, die als gleichsinnig wirkende Extreme gelten können.

Die Wirkungsweise der Erfindung scheint darauf zu beruhen, daß die Harzlösung Moleküle dreier unterschiedlicher Größenklassen enthält. Jedenfalls hat sich bei der Untersuchung der Molekulargewichtsverteilung gezeigt, daß eine Verteilung mit drei deutlichen Maxima vorliegt.

Eine Methode, mit der solche Größenverteilungen gemessen werden können, ist die sogenannte Gelpermeationschromatographie (GPC), bei der das unterschiedliche Retardierungsverhalten gelöster Makromoleküle, beim Durchlaufen mikroporöser Schichtungen zur Kennzeichnung der Molekülgröße benützt wird.

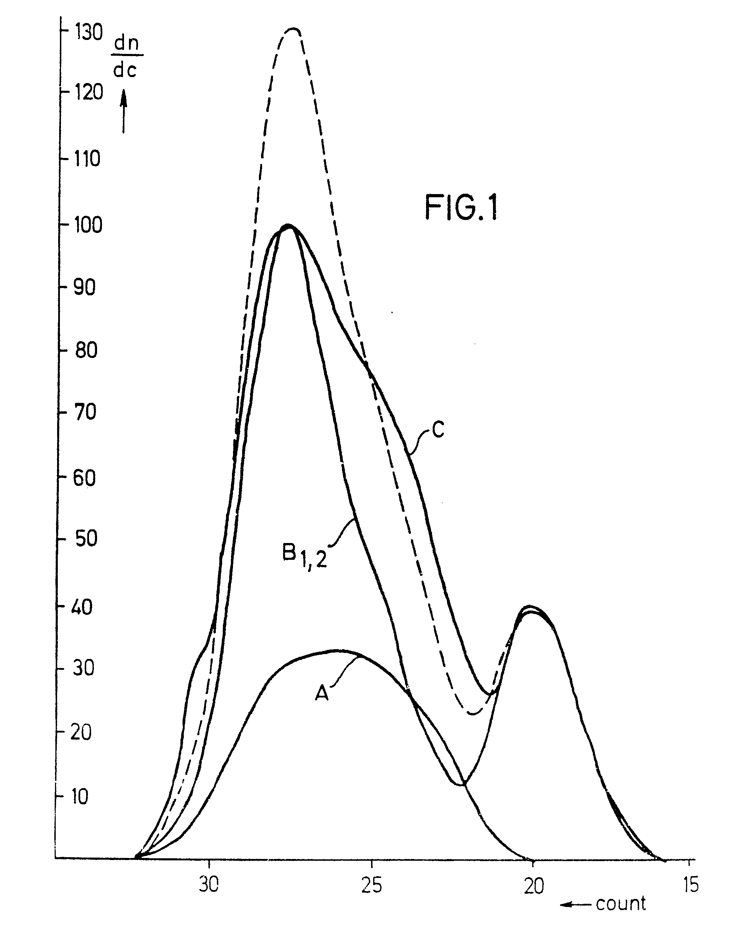

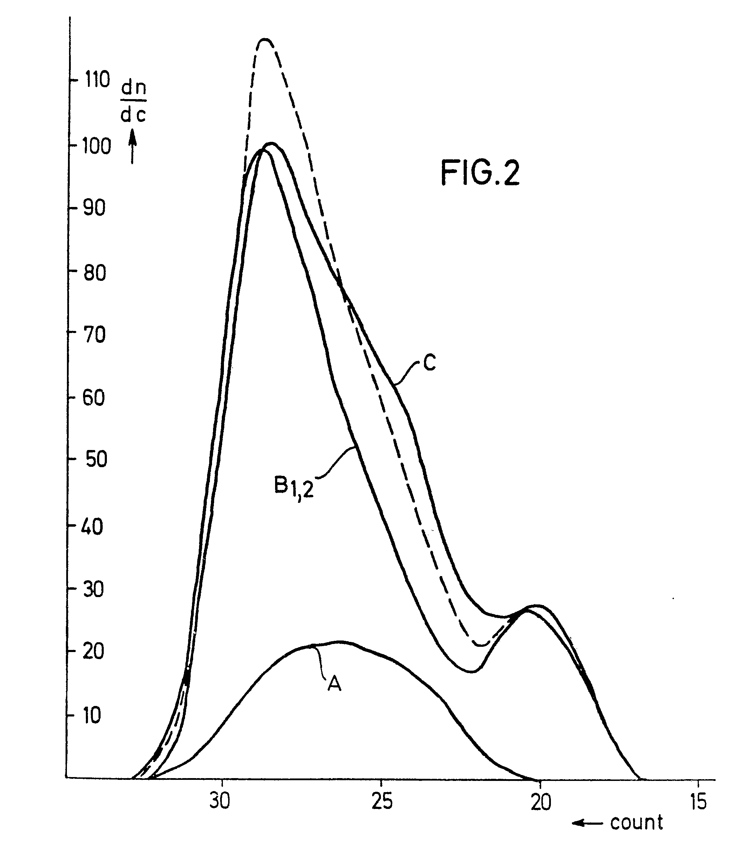

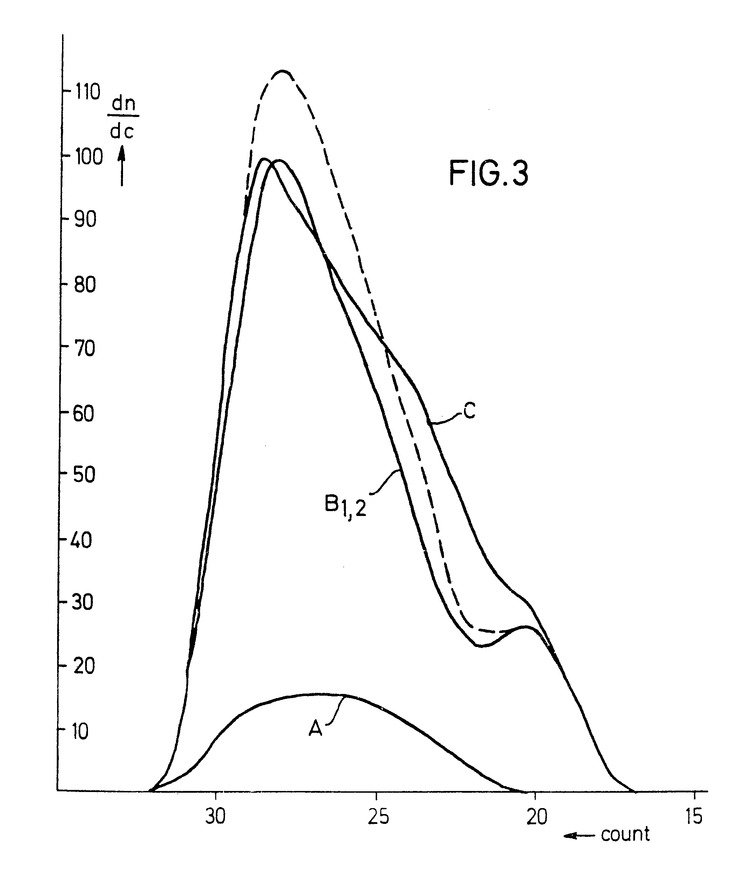

Die als Anhang an die nachfolgenden Beispiele wiedergegebenen Vertilungskurven (Figur 1 bis 3) sind in Abhängigkeit von der Durchlaufmenge (v) gemessene relativ Brechungsindices.

Unter der vereinfachenden Annahme, daß der Brechungsindex nur der gelösten Masse proportional und nicht von der Molekülsorte abhängig ist, stellen die Kurven somit die Massenhäufigkeit der M.G.-Verteilung dar. Ersichtlich weisen auch die Produkte, die zur Herstellung der erfindungsgemäßen Harze verwendet wurden, nämlich das als konventionelles Leimharz mit niederem F:H-Verhältnis anzusehende Harz (B) und das Formaldehydanlagerungsprodukt mit hohem F:H-Verhältnis (A) eine Molgewichtsverteilung auf, die im Prinzip im Endprodukt wieder gefunden wird.

Zur Herstellung erfindungsgemäßer Harze ist im einzelnen das folgende zu sagen:

Die als Ausgangsprodukt verwendeten konventionellen Harze (B in den Abbildungen und Beispielen; auch als Primärlösungen bezeichnet) besitzen, allgemein gesprochen, ein niederes Molverhältnis F:H (bis herunter zu 1:1, bevorzugt etwa 1,3:1) und ein hohes Molgewicht, d.h. einen Kondensationsgrad, der so hoch wie möglich ist; solche Harze sind für sich zwar herstellbar, aber nur wenig lagerstabil und wegen der Wasserunverträglichkeit nur in warmem Zustand zu handhaben. Ihre Dichte beträg 1,17 bis 1,19 (g/cm³) bei 20°C bei einem Feststoffgehalt von 40 bis 50%, einem freien Formaldehyd-Gehalt von 0,20 bis 0,60%, einem N-Methylol-Gehalt von etwa 6 bis 10% (s. Tabelle 1, B₁). Bei der Berechnung des Molverhältnisses wird gegebenenfalls miteinkondensiertes Melamin wie Harnstoff gezählt.

Zu ihrer Herstellung wählt man die übliche Reihenfolge von Schritten, wie sie zur Herstellung von Leimharzen allen Fachleuten geläufig ist. Das heißt, daß Harnstoff (gegebenenfalls teilweise—z.B. bis zu 40 Gew.%—ersetzt durch Melamin) und wäßriger Formaldehyd zunächst zu Vorkondensaten umgesetzt werden, die niedermolekular zu sein pflegen. Dieser Vorgang verläuft am raschesten unter schwach alkalischen Bedingungen (pH 8 bis 9) und wird daher, um der Tendenz zum Absinken des pH-Wertes zu begegnen, unter dem Einfluß geringer Alkalilaugezusätze geleitet.

Harnstoff kann natürlich auch in Form der technisch üblichen konzentrierten wäßrigen Lösungen verwendet werden und es können bis zu etwa 40 Gew.% des Harnstoffs durch Melamin ersetzt werden, falls dies erwünscht ist. Die Verwendung von Melamin ist z.B. für die Wasserfestigkeit der Leime von Bedeutung.

Ferner sind als Harnstoffquelle zur Herstellung von Leimharzen (B) geeignet die Anlagerungsprodukte von Formaldehyd und Harnstoff, die technisch gängige Formaldehydlieferanten sind. Solche Anlagerungsprodukte können z.B. nach den DE—A 16 43 705, 17 68 987, 19 51 877 und der DE—B 16 45 016 oder der DE—C 1 239 290 erhalten werden. Sie haben im allgemeinen ein F:H-Molverhältnis von 5:1 bis 3:1 und dienen, wie weiter unten erläutert ist, auch später zur Umsetzung mit den hier vorweg beschriebenen Harzprodukten. Sie werden in diesem Zusammenhang als Leimkomponente A bezeichnet.

Zur Kondensation stellt man die wäßrigen Vorkondensate, die nach der alkalischen Reaktionsphase einen Trockengehalt von 30 bis 70% zu haben pflegen, auf pH 3 bis 5,5 bevorzugt 4 bis 4,5 ein (z.B. durch Zusatz von Ameisensäure) und kondensiert nun bis zur beginnenden Wasserunverträglichkeit, d.h. soweit wie möglich. Bei einer Kondensationstemperatur von 80 bis 100°C nimmt die Kondensation i.a. 10 bis 30 Minuten in Anspruch. Durch Abkühlenlassen von Proben bestimmt man den Trübungspunkt, der bei 3 bis 30°C, bevorzugt 5 bis 20°C, d.h. also bei einer bei Raumtemperatur beginnenden Wasserunverträglichkeit liegen sollte. Falls anstelle von Formaldehyd als Rohstoffe für das Verfahren formaldehydreiche Vorkondensate (vom Typ, der oben als Vorkondensat (A) bezeichnet wurde) verwendet werden, ist es zweckmäßig, den Trübungspunkt nicht mit der unverdünnten Kondensatlösung, sondern nach Verdünnen mit heißem Wasser im Verhältnis 1:1 zu bestimmen. Dies ist deshalb empfehlenswert, weil die Kondensation in diesem Falle sehr rasch fortschreitet und eine ausreichender zeitlicher Spielraum für den Anschluß des nächsten Verfahrensschrittes verbleiben sollte.

**0 001 596**

Als nächster Verfahrensschritt, d.h. anschließend, wird die Kondensation durch Zusatz von Alkalilauge bis zu einem pH-Wert von 6,5 bis 7,5 (Neutralpunkt) unterbrochen und soviel Harnstoff zugesetzt, daß ein Molverhältnis von 1:1 bis 1,7:1, bevorzugt 1:1 bis 1,5:1 erreicht wird; besonders bevorzugt ist ein Molverhältnis von 1,2:1 bis 1,4:1. Der Harnstoff wird vom Kondensat in bekannter Weise angelagert; bei Bedarf kann die erhaltene wäßrige Harzlösung noch auf einen Feststoffgehalt von 55 bis 70, bevorzugt 55 bis 60% eingeengt werden, bevorzugt unter vermindertem Druck. Die verdünnte Harzlösung wird in den Beispielen mit $B_1$ bezeichnet, während sie nach dem Eingengen als $B_2$ aufgeführt wird. Die Harzlösung $B_2$ besitzt eine Dichte von 1,26 bis 1,29 ($g/cm^3$), 0,1 bis 0,3% freien Formaldehyd, 8 bis 12% N-Methylolgehalt, eine Viskosität von 400 bis 1.200 mPa.s (s. Tabelle 1). Nun ist, wie gesagt, ein solches hochmolekulares Harz wegen seiner schwierigen Handhabung schlecht unmittelbar als Leim zu verarbeiten und weist auch insofern einen Nachteil auf, als ihm offenbar gerade die Bestandteile fehlen, die für die Bindung des Leimes an die Holzfaser als verantwortlich angesehen werden; die Folge ist eine starke Quellneigung solcher Holzwerkstoffe (vermutlich weil die Imprägnierwirkung des Leimes fehlt) und eine verringerte Querzugsfestigkeit. Die Erfindung beruht nun, vereinfacht, darauf, daß man solches, ungewöhnliches, wenn auch auf an sich bekanntem Weg erhaltenes Harz mit einem speziellen "Lösungsmittel" versetzt. Als Lösungsmittel dient in diesem Fall ein harnstoffhaltiges Formaldehydkonzentrat (A), wie es oben beschrieben wurde. Geeignete Formaldehydkonzentrate sind auch handelsüblich.

Die erwähnten Formaldehydkonzentrate werden entweder durch Einleiten von gasförmigem Formaldehyd in alkalische Harnstofflösungen oder in saure Lösungen von Harnstoffvorkondensaten, die ein gewisses Mindestmolverhältnis aufweisen, erhalten; sie stellen eine bequeme Handhabungsform von konzentrierten Formaldehydlösungen dar. Als Klebstoffe (Leime) sind sie nicht geeignet.

Das Harz (B bzw. $B_2$) wird mit dem formaldehydreichen Konzentrat (A) in einer solchen Menge versetzt, daß sich ein (Gesamt)-Molverhältnis von 1.2 bis 1,8:1 ergibt. Da sich dieser Bereich mit dem in Frage kommenden Bereich des Molverhältnisses des Harzes B überschneiden kann, gilt als Regel, daß sich bei der Abmischung mit dem Formaldehydanlagerungsprodukt A das Molverhältnis um wenigstens 0,1 ändert (d.h. erhöht).

In dem durch den Zusatz eingeleiteten Verfahrensschritt läßt man nun die Leimkomponente A mit der Leimkomponente $B_2$ bei Temperaturen von 20 bis 60°C 2 bis 24 Stunden lang reagieren und erhält als Reaktionsprodukt eine Lösung eines Harzes C mit optimalen "Kaltklebrigkeitseigenschaften". Das Mengenverhältnis der Leimkomponente A zur Leimkomponente $B_2$ kann je nach den Eigenschaftswerten beider und der gewünschten Einstellung des Molverhältnisses Harnstoff zu Formaldehyd im fertigen Reaktionsprodukt C gewählt werden (z.B. 3 bis 30 Teile A auf 100 Teile $B_2$, jeweils Feststoff bezogen auf Feststoff).

Geht man z.B. aus von eimem Harz in Form der Primärlösung B mit einem Molverhältnis von 1,3:1 und hat ein harnstoffhaltiges Formaldehydkonzentrat A mit 50% Formaldehydgehalt und mit einem Molverhältnis von 4:1 zur Verfügung, so bedeutet das, daß man zur Erzielung eines Gesamtmolverhältnisses von 1,5:1 etwa 3,7% von diesem Konzentrat, bezogen auf die Primärlösung, zusetzen muß.

Wie aus den Figuren 1, 2 und 3 deutlich hervorgeht, würde die Mischung der polymerhomologen Verteilungen der Komponenten A und $B_2$ ein Produkt mit der gestrichelten Verteilungskurve ergeben. Da es sich aber nicht um eine einfache Mischung, sondern um ein gemäß der Erfindung erhaltenes Reaktionsprodukt handelt, erhält man eine polymerhomologe Verteilung, die der des erfindungsgemäß hergestellten Leimharzes C entspricht.

Durch die erfindungsgemäße Reaktionsführung besitzt das Harz drei für die Kaltklebeeigenschaft wichtige polymerhomologe Anteile:

a) den hochmolekularen Anteil im Bereich count[+)] 16 bis ca. 23 und

b) einen mittelmolekularen Anteil im Bereich count 23 bis ca. 27 und weiter

c) niedermolekulare Polymerhomologe, oligomere Kondensationsprodukte und freien Formaldehyd im Bereich count 27 bis 33.

Die Kombination aller dieser polymerhomologen Anteile, insbesondere diejenigen der hochmolekularen im Bereich count 16 bis 23 und der mittelmolekularen bei count 23 bis 27 rufen die nach dem Verfahren beschriebene optimale Kaltklebewirkung hervor bei gleichzeitiger Erfüllung aller technischer Gütenormen am Fertigprodukt (z.B. Spanplatten oder Formkörper).

Beispiel 1

a) Herstellung der Harzlösung $B_1$ bzw. $B_2$ 100 kg einer 40%-igen Formaldehydlösung, die auf pH 7,8 eingestellt ist, werden mit 50 kg Harnstofflösung (800 g/l, Dichte bei 80°C=1,1603 ($g/cm^3$), Molverhältnis F:H=2:1) in einen Rührkessel gegeben und mit 20%-iger Natronlauge auf einen pH-Wert über

---

[+)] count (5 ml/5 min) ist die Durchlaufmenge je Zeiteinheit (ml/min) wie sie mit dem von der Firma Waters Ass., Milford, Mass. (U.S.A.) hergestellten Gerät erhalten wird, wobei zur Ermittlung der polymerhomologen Verteilung von Harnstoff-Formaldehyd-Harzen die Harze zeurst mit N-Methyl-N-trimethyl-silyl-trifluoracetamid in Dimethylformamid (DMF) silyliert werden. Der niedermolekulare Anteil wird bei 20°C und einem Druck von etwa 0,3 mbar samt dem Lösungsmittel abdestilliert, der Rückstand wird in DMF wieder aufgenommen und als 0,35%-ige Lösung ins GPC-Gerät eingespritzt.

4

6,8 gebracht. Man erhitzt auf 85°C und läßt bei einsetzender Reaktion 15 Minuten vorkondensieren. Danach stellt man die Wärmezufuhr ab und bringt durch Zugabe von 10%-iger Ameisensäure den pH-Wert auf 4,5. Die Kondensation wird nun bei einer Temperatur von ca. 95 bis 100°C bis zu einem Trübungspunkt[++] von 10°C geführt und die Kondensatlösung mit 20%-iger Natronlauge auf einen pH-Wert von 7,0 neutralisiert. Jetzt stellt man durch Zugabe von 41 kg Harnstofflösung 0,5 Mol das Molverhältnis H:F auf 1:1,1 ein und läßt ca. 30 Minuten bei über 95°C nachkondensieren. Es ist darauf zu achten, daß der pH-Wert nicht unter 6,8 abfällt.

Die so erhaltene Harzlösung $B_1$ wird nun, z.B. in einem geeigneten Vakuumverdampfer durch Entzug von Wasser auf eine Dichte von 1,286 (g/cm$^3$) eingeengt, danach auf Raumtemperatur abgekühlt und man erhält die Harzlösung $B_2$ (Daten vgl. Tabelle 1; technische Daten einer daraus hergestellten Spanplatte, Tabelle 1).

b) Herstellung des erfindungsgemäßen Leimharzes Je 100 Gewichtsteile der Harzlösung $B_2$ werden mit ca. 34 Gewichtsteilen eines harnstoffhaltigen Formaldehydkonzentrats, das nachfolgend als A 50 bezeichnet wird und ein Molverhältnis von Formaldehyd zu Harnstoff wie 3,9:1 aufweist (sonstige Daten vgl. Tabelle 1) bei Raumtemperatur in einem Rührkessel vermischt. Man läßt die nun einsetzende Reaktion ca. 24 Stunden vor sich gehen. Danach tritt keine wesentliche Veränderung mehr ein und die Harzlösung ist gebrauchsfertig.

Man erhält ein erfindungsgemäßes Produkt C mit den in der Tabelle 1 wiedergegebenen Eigenschaften. Die durch Gelpermeationschromatographie ermittelte Verteilung der Molekülgrößen ist in der Abbildung 1 wiedergegeben.

Beispiele 2 bis 4

Man verfährt, wie in Beispiel 1 beschrieben, unter entsprechender Veränderung der Mengenverhältnisse, sodaß sich die in der Tabelle 1 angegebenen Molverhältnisse und Konzentrationen einstellen.

Beispiel 5

a) Herstellung der Harzlösung $B_1$, $B_2$ Je 100 kg eines wäßrigen, 50%-igen H.F.-Vorkondensates, das bei einem Molverhältnis von 4:1 einen Formaldehydgehalt von 4% aufweist (Dichte 1,186 g/cm$^3$), werden mit Natronlauge auf einen pH-Wert von 7,8 eingestellt und zusammen mit je 29,8 kg Harnstofflösung (800 g/l, Dichte 1,1603 g/cm$^3$ bei 80°C in einem Rührkessel auf 85°C aufgeheizt (Molverhältnis F:H=2,0:1) und 15 Minuten vorkondensiert, wobei der pH-Wert nicht unter 6,8 abfallen darf. Danach wird mit 10%-iger Ameisensäure auf einen pH-Wert von 4,5 eingestellt und bei einer Temperatur von 95 bis 100°C bis zu einem Trübungspunkt[2] von 25°C kondensiert. Dann wird die Harzlösung mit 20%-iger Natronlauge auf einen pH-Wert von 7,0 gebracht und die Einstellung des Molverhältnisses F:H=1,3:1 durch Zugabe von 32,02 kg Harnstofflösung (800 g/l, $D_{80°C}$=1,1603) vorgenommen. Es setzt nochmals eine kräftige Reaktion ein, wobei man den pH-Wert nicht unter 6,8 absinken läßt.

Die erhaltene Harzlösung $B_1$ wird durch Wasserentzug auf eine Dichte von 1,276 eingeengt. Man erhält eine Harzlösung $B_2$ mit den in der Tabelle 1 wiedergegebenen Eigenschaften.

100 Teile der Harzlösung $B_2$ werden mit 16 Teilen Formaldehydkonzentrat A 55, unter Rühren bei Raumtemperatur zur Reaktion gebracht, in dem man 24 Stunden stehen läßt. Danach werden die Daten gemäß Tabelle 1 dieses Leimharzes gemessen.

---

[++]Trübungspunktbestimmung: Eine Probe aus dem Reaktionskessel in ein Reagenzglas geben und unter Umrühren mit einem Stabthermometer abkühlen bis eine milchige Trübung eintritt. Die abgelesene Temperatur bei Eintritt der Trübung ist der gesuchte Trübungspunkt.

[2] Trübungspunktmessung: In diesem Fall wird eine Probe von 10 ml in ein graduiertes Reagenzglas gegeben, mit 10 ml heißem Wasser versetzt und unter Rühren abgekühlt. Die beim Eintreten einer milchigen Trübung abgelesene Temperatur ist der gesuchte Trübungspunkt.

Tabelle 1

| Beispiel | | Viskosität mPa.s | pH-Wert | Trocken-gehalt % | Dichte g/cm³ | Mol-Verh. F:H | freier Form-aldehyd % | N-Methylol-gehalt % | Konden-sati-onsgrad (berech-net) | Kalt-klebrig-keits-index % | bei ºC | rel. Luft-feuchte (%) | Technische Meßwerte von Spanplatten, die mit den jeweiligen Leimharzen hergestellt wurden | | | |
|---|---|---|---|---|---|---|---|---|---|---|---|---|---|---|---|---|
| | | | | | | | | | | | | | Quellung | | Festigkeiten | |
| | | | | | | | | | | | | | nach 2 Stdn. (%) | nach 24 Stdn. (%) | Querzug (kp/cm²) | Biegung (kp/cm²) |
| | A | 503 | 7,2 | 64,75 | 1,320 | 3,67 | 9,51 | 41,93 | 81,48 | 80,73 | 20 | 50 | 7,75 | 23,48 | 1,82 | 166,68 |
| | A | 129 | 7,0 | 58,86 | 1,281 | 3,90 | 10,43 | 43,51 | 50,17 | 80,50 | | | 8,12 | 24,20 | 2,10 | 158,20 |
| 1 | B₁ | 44 | 7,15 | 44,24 | 1,181 | 1,10 | 0,25 | 7,28 | 69,91 | — | 17 | 51 | — | — | — | — |
| | B₂ | 1.135 | 9,5 | 63,02 | 1,286 | 1,10 | 0,15 | 10,85 | 67,90 | 64,2 | 17 | 51 | 15,48 | 27,90 | 4,46 | 206,98 |
| | C | 907 | 9,0 | 64,20 | 1,286 | 1,50 | 0,47 | 18,95 | 62,54 | 63,0 | | | 6,13 | 16,85 | 5,68 | 273,18 |
| 2 | B₁ | 59 | 7,20 | 44,48 | 1,180 | 1,20 | 0,17 | 7,97 | 72,12 | — | 20 | 50 | — | — | — | — |
| | B₂ | 1.576 | 9,2 | 63,51 | 1,278 | 1,19 | 0,18 | 11,18 | 72,02 | 62,6 | 20 | 50 | 13,65 | 22,65 | 4,23 | 209,77 |
| | C | 1.160 | 9,30 | 64,25 | 1,284 | 1,51 | 0,57 | 17,11 | 70,50 | 61,9 | | | 8,39 | 20,22 | 5,68 | 275,61 |
| 3 | B₁ | 33 | 7,3 | 44,38 | 1,178 | 1,29 | 0,43 | 9,32 | 72,00 | — | 23 | 58 | — | — | — | — |
| | B₂ | 601 | 9,1 | 62,60 | 1,274 | 1,28 | 0,21 | 13,11 | 69,90 | 59,9 | 23 | 58 | 9,50 | 20,32 | 5,15 | 230,85 |
| | C | 615 | 8,6 | 63,80 | 1,284 | 1,48 | 0,57 | 17,29 | 68,21 | 57,3 | | | 8,68 | 20,17 | 7,48 | 241,12 |
| 4 | B₁ | 30 | 7,20 | 44,44 | 1,180 | 1,30 | 0,49 | 8,68 | 73,43 | — | 32 | 37 | — | — | — | — |
| | B₂ | 470 | 8,9 | 61,25 | 1,264 | 1,30 | 0,23 | 11,67 | 73,84 | 60,9 | 32 | 37 | 10,37 | 21,79 | 5,27 | 193,75 |
| | C | 511 | 8,8 | 62,22 | 1,278 | 1,52 | 0,58 | 16,77 | 72,27 | 56,8 | | | 8,06 | 17,94 | 6,78 | 189,07 |
| 5 | B₁ | 71 | 7,2 | 52,44 | 1,220 | 1,30 | 0,31 | 11,23 | 71,2 | 71,21 | 27 | 54 | — | — | — | — |
| | B₂ | 421 | 9,6 | 62,29 | 1,276 | 1,30 | 0,23 | 14,06 | 71,21 | 58,3 | 27 | 54 | 8,93 | 23,58 | 5,85 | 186,45 |
| | C | 461 | 9,3 | 63,30 | 1,280 | 1,50 | 0,60 | 18,54 | 61,57 | 60,1 | | | 7,93 | 20,06 | 6,95 | 189,64 |

Fehlergrenzen der einzelnen Meßdaten in Tabelle 1

a) für Leimdaten

| | |
|---|---|
| Feststoffgehalt (%) | ±1,00% |
| Dichte (g/cm³) | ±0,05% |
| Viskosität (Ubbelohde) (mPa.s=cP) | ±1,00% |
| freier Formaldehyd (%) | ±0,01% |
| N-Methylolgehalt (%) | ±0,10% |
| Molverhältnis HA:FA | ±2,00% |
| Kaltklebrigkeitswerte (%) | ±4,00% |

b) für technische Daten gemessen an Spanplatten

Dickenquellung (%)
2 Stunden-Wert ±1—3%
24 Stunden-Wert ±1—4%
Querzugsfestigkeit (kp/cm²) ±10—15%

Biegefestigkeit (kp/cm²) ±10—15%

gemittelt aus
(60 Einzelmessungen)
(30 Einzelmessungen)
(30 Einzelmessungen

Kaltklebrigkeitsmessung

Prinzip: Rückfederung eines kalt vorgepreßten Preßkuchens aus beleimten Spänen in Prozent, bezogen auf eingestellte Preßkuchenhöhe unter der Presse.

Die beleimten Späne werden sorgfältig von Hand in eine Form (Preßkasten) eingebracht, wobei keine Schichtung der einzelnen Spanteilengrößen erfolgen soll (Schüttzeit etwa 1 bis 3 Minuten). Die so aufgeschütteten Späne werden in einer kalten Presse im Preßkasten (bei 20 bis 25°C und 50 bis 60% relativer Luftfeuchtigkeit) auf eine bestimmte Preßkuchenhöhe (z.B. 24 mm) zusammengepreßt (Preßdruck etwa 20 kp/mm², Preßzeit 20 Minuten). Nach der Entnahme wird der kaltgepreßte Preßkuchen aus dem Preßrahmen entnommen und 10 Minuten frei in Raum liegen gelassen; dann mißt man die Dicke des Preßkuchens an mindestens 8 Stellen und berechnet einen Mittelwert. Als Maß der Kaltklebrigkeit in Prozent (Kaltklebrigkeitsindex) dient die so ermittelte mittlere Höhe des kaltgepreßten Preßkuchens nach 10 Minuten (h) bezogen auf die in der Presse eingestellte Vorpreßhöhe (ho):

$$\text{Kaltklebrigkeit \%} = \frac{(h-ho) \cdot 100}{ho} \text{(Fehlergrenze etwa 4\%)}$$

Ersichtlich entspricht ein kleinerer Index einer besseren Kaltklebekraft. Die Rückfederungsmethode ist eine Realtivmethode. Ein Vergleichsstandard sollte immer mitgemessen werden. Die Größe der Kaltklebrigkeit hängt von vielen Versuchsbedingungen ab: Raumtemperatur, Luftfeuchte, Mischertyp und Mischgröße (Abmessungen), Korngrößenverteilung und Änderung der Korngrößenverteilung beim Mischen, Preßbedingungen wie: Dicke und Größe des Preßkuchens, Spanfeuchte, Spantemperatur, Preßdruck, Schließgeschwindigkeit der Kaltpresse, Beleimungszeit der Späne, Schüttzeit der beleimten Späne, Schüttgewicht und Schüttvorgang. Solche Parameter müssen zur Erzeilung zuverlässiger Vergleichswerte konstant gehalten werden.

Beispiele 6 bis 8
—hierbei wird ein Teil des Harnstoffs durch Melamin ersetzt—

Herstellung der Lösungen $B_1$ bzw. $B_2$

100 kg eines wäßrigen 50%-igen Harnstoff-Formaldehyd-Vorkondensates (A) mit einem Molverhältnis von Formaldehyd zu Harnstoff wie 4:1 und 26,75 kg einer wäßrigen Formaldehyd-Lösung werden auf einen pH-Wert von 7,8 eingestellt und mit 30 kg Melamin ca. 30 Minuten lang bei ca. 98°C umgesetzt, bis eine Probe (1:1 mit Wasser verdünnt) bei ca. 30°C ein Trübung zeigt. Dann stellt man mit 20%-iger Natronlauge auf einen pH-Wert von 8,6 ein und gibt 41,65 kg heiße Harnstoff-Lösung (800 g/l bei 80°C) zu. Dabei stellt sich ein pH-Wert von 6,9 ein ($B_1$). Diese Lösung wird durch Wasserentzug auf eine Dichte von 1,276 eingeengt ($B_2$).

Herstellung des Leimharzes

100 kg des Kondensates $B_2$ werden mit 21,14 kg des Vorkondensats (A) gemischt und 24 Stunden bei Raumtemperatur belassen. Das Produkt kann dann zur Verarbeitung mit den in der Tabelle wiedergegebenen Verleimungseigenschaften verwendet werden.

Zur Untersuchung des Einflusses unterschiedlicher Melamin-Mengen wird dessen Anteil in den Beispielen 7 und 8 gegenüber Beispiel 6 in der Weise verändert, wie dies aus der nachstehenden Tabelle zu ersehen ist.

Tabelle

| Bsp. | | Melamin | Harnstoff | Formaldehyd | pH-Wert | Feststoffgehalt d. Lösung % | Dichte g/cm³ |
|---|---|---|---|---|---|---|---|
| 6 | Gewichtsmenge<br>Molmenge<br>Molverhältnis<br>bez. auf Melamin | 30<br>0,24<br>1 | 61,4<br>1,02<br>4,3 | 50,1<br>1,67<br>7,02 | 7,8 | 58,18 | 1,260 |
| 7 | Gewichtsmenge<br>Molmenge<br>Molverhältnis<br>bez. auf Melamin | 15<br>0,12<br>1 | 68,4<br>1,14<br>9,6 | 50,1<br>1,67<br>14,04 | 8,9 | 66,80 | 1,298 |
| 8 | Gewichtsmenge<br>Molmenge<br>Molverhältnis<br>bez. auf Melamin | 4,5<br>0,036<br>1 | 78,9<br>1,31<br>36,5 | 50,18<br>1,67<br>46,4 | 7,4 | 58,68 | 1,255 |

**Patentanspruch**

Verfahren zur Herstellung von wäßrigen Harnstoff-Formaldehyd-Kondensaten, die sich als kaltklebende Holzleime, insbesondere Spanplattenleime eignen, dadurch gekennzeichnet, daß man ein gegebenenfalls Melamin in modifizierenden Mengen enthaltendes wäßriges Aminoplastkondensat (B), das erhalten wurde durch

a) Umsetzung von wäßrigem Formaldehyd mit Harnstoff und gegebenenfalls Melamin in modifizierenden Mengen und/bzw. deren Vorkondensaten im Molverhältnis von 1,8:1 bis 2,5:1 bei einem pH-Wert von über 6,8,

b) Kondensation der Umsetzungsprodukte bei einem pH-Wert von 3 bis 5,5 bis zur beginnenden Wasserunverträglichkeit (entsprechend einem Trübungspunkt der unverdünnten, 30 bis 55%-igen Lösung von 3 bis 30°C) und

c) Umsetzung der Kondensationsprodukte mit Harnstoff bei einem pH-Wert von 6,5 bis 7,5 zu einem Molverhältnis von 1:1 bis 1,7:1, gegebenenfalls nach Einengung unter vermindertem Druck auf eine Konzentration von 55 bis 70%

mit einem durch Einleiten von Formaldehyd in eine wäßrige Harnstofflösung erhältlichen, freien Formaldehyd enthaltenden Harnstoff-Formaldehyd-Vorkondensat (A), das ein Molverhältnis von F:H wie 3:1 bis 5:1 aufweist, in solchen Mengen vermischt, daß das Gesamtmolverhältnis 1,2:1 bis 1,8:1 beträgt und gegenüber dem Harz (B) um wenigstens 0,1 Mol Formaldehyd ansteigt und die Mischung bei einem pH-Wert von 6,5 bis 8 wenigstens solange beläßt, bis der Gehalt an freiem Formaldehyd auf unter 1% gesunken ist.

**Revendication**

Procédé pour la préparation de produits aqueux de condensation d'urée-formaldéhyde qui conviennent en tant que colles à bois adhésives à froid, et notamment en tant que colles pour panneaux de copeaux agglomérés, caractérisé en ce qu'on mélange un condensat aminoplastique aqueux (B) qui contient éventuellement de la mélamine dans des proportions modificatrices et qui a été obtenu par:

a) réaction de formaldéhyde aqueux avec l'urée et éventuellement la mélamine dans des proportions modificatrices et/ou des pré-condensats de celles-ci, dans un rapport molaire de 1,8:1 à 2,5:1 à un pH de plus de 6,8,

b) condensation des produits de réaction à un pH de 3 à 5,5 jusqu'à l'incompatibilité débutante avec l'eau (correspondant à un point de trouble de 3 à 30°C de la solution à 30—55% non diluée), et

c) réaction des produits de condensation avec l'urée à un pH de 6,5 à 7,5, jusqu'à un rapport molaire de 1:1 à 1,7:1, le cas échéant après concentration sous pression réduite à une concentration de 55 à 70%,

avec un pré-condensat d'urée-formaldéhyde (A) contenant du formaldéhyde libre et obtenu par passage de formaldéhyde dans une solution aqueuse d'urée, pré-condensat qui présente un rapport molaire F:U de 3:1 à 5:1, ce mélange étant effectué dans des proportions telles que le rapport molaire global se situe entre 1,1:1 et 1,8:1 et s'élève d'au moins 0,1 mol de formaldéhyde par rapport à la résine (B), puis on abandonne le mélange à un pH de 6,5 à 8, au moins jusqu'à ce que la teneur en formaldéhyde libre se soit abaissée à moins de 1%.

**Claim**

A process for the production of aqueous urea-formaldehyde condensates which are suitable as cold wood glues, particularly particle board glues, characterized in that an aqueous aminoplast condensate (B) optionally containing melamine in modifying amounts, and obtained by

a) reacting aqueous formaldehyde with urea, with or without melamine in modifying amounts, and/or precondensates thereof in a molar ratio of from 1.8:1 to 2.5:1 at a pH of more than 6.8,

b) condensing the reaction products at a pH of from 3 to 5.5 until incompatibility with water starts (corresponding to a cloud point of the undiluted, 30 to 55% strength solution of 3 to 30°C), and

c) reacting the condensation products with urea at a pH of from 6.5 to 7.6 until a molar ratio of from 1:1 to 1.7:1 is reached, optionally after evaporation under reduced pressure down to a concentration of 55 to 70%,

is mixed with a ureaformaldehyde precondensate (A) containing free formaldehyde and obtainable by passing formaldehyde into an aqueous urea solution, which precondensate has a molar ratio of formaldehyde to urea of 3:1 to 5:1, in such an amount that the total molar ratio is 1.2:1 to 1.8:1 and there is at least 0.1 mole more of formaldehyde, present than in resin (B), and the mixture is left at a pH of from 6.5 to 8 at least until the content of free formaldehyde has dropped to below 1%.

FIG.1

FIG.2

FIG.3